# EUROPÄISCHE PATENTSCHRIFT

(11) **EP 1 146 238 B1**
(45) Veröffentlichungstag und Bekanntmachung des Hinweises auf die Patenterteilung: **06.10.2004**
(21) Anmeldenummer: 01108335.9
(22) Anmeldetag: 03.04.2001
(51) Int. Cl.: F16D 3/79

(54) **Ringlamelle für flexible Wellenkupplungen**
Annular lammelae for an elastic shaft coupling
Lamelle annulaire pour accouplement élastique d'arbres

(30) Priorität: 10.04.2000 DE 10017512
(43) Veröffentlichungstag der Anmeldung: 17.10.2001
(73) Patentinhaber: ATEC-Weiss GmbH & Co. KG, D-48691 Vreden (DE)
(72) Erfinder: Kropp, Michael, 48703 Stadtlohn (DE); Millet, Patrice, Dr., 48691 Vreden (DE)
(74) Vertreter: COHAUSZ & FLORACK

(56) Entgegenhaltungen:
- DE-A- 3 437 388
- DE-A- 3 722 511
- DE-U- 8 503 026
- FR-A- 2 409 417
- GB-A- 1 153 864
- US-A- 1 455 242

## Beschreibung

Die Erfindung betrifft eine Ringlamelle aus Stahl für flexible Wellenkupplungen, deren beide jeweils einen Anschlußflansch aufweisende Kupplungshälften über ein Paket solcher Ringlamellen drehstarr und axial- und winkelbeweglich miteinander verbunden sind, wobei das Lamellenpaket mittels umfangsmäßig verteilt angeordneter Befestigungs- und Spannmittel wechselweise an den beiden Anschlußflanschen befestigt ist, und wobei die Ringlamelle vier auf einem gemeinsamen Lochkreis gleichmäßig verteilt angeordnete Befestigungsbohrungen aufweist und sich die Breite des Ringlamellenabschnitts zwischen zwei aufeinander folgenden Befestigungsbohrungen verjüngt. Die Erfindung betrifft ferner ein aus solchen Ringlamellen gebildetes Lamellenpaket sowie eine flexible Wellenkupplung mit solchen Ringlamellen.

Kupplungen dieser Art sind bekannt und haben sich in der Praxis bewährt. Sie ermöglichen den Ausgleich sowohl eines Axialversatzes als auch eines Winkelversatzes der miteinander zu verbindenden Wellen. Ferner ist auch der Ausgleich eines Radialversatzes möglich, wenn zwei solche Kupplungen unter Verwendung einer sogenannten Zwischenhülse hintereinandergeschaltet werden.

Zum Stand der Technik sei auf die Dokumente DE 3722511 A, GB 1153864 A, FR 2409417 A, US 1455242 A, DE 8503026 U und DE 3437388 A hingewiesen. Aus diesen Dokumenten sind Ringlamellen der oben genannten Art bekannt. In der DE 3722511 A1 beispielsweise ist eine Gelenkkupplung zum Verbinden von Wellen mit einer metallischen Antriebs- und einer metallischen Abtriebsscheibe beschrieben, wobei die Antriebs- und Abtriebsscheibe durch wenigstens zwei parallel geschaltete metallische Membranringe verbunden sind, die in einer um die halbe Teilung oder wenigstens zwischen benachbarten Verbindungsschrauben einer Gruppe von Verbindungsschrauben gegeneinander versetzten Umfangslage angeordnet sind, wobei die Verbindungsschrauben der beiden Membranringe auf einem oder benachbarten konzentrischen Teilkreisen liegen und die Membranringe zwischen zwei aufeinander folgenden Verbindungsschrauben an ihrem Umfang jeweils eine taillenartige Einschnürung mit einer solchen Tiefe aufweisen, dass die Umfangskante an der radial inneren Seite der Verbindungsschrauben des jeweils anderen Membranringes verläuft. Mit dieser Gelenkkupplung soll im Vergleich zu herkömmlichen Gelenkkupplungen dieser Art bei gleichen Bauabmessungen unter Beibehaltung der elastischen Eigenschaften wie axiale und winkelige Nachgiebigkeit ein wesentlich höheres Drehmoment übertragbar sein. Zur Vermeidung von unzulässig hohen Spannungen an den Einspannstellen sind an diesen Stellen beiderseits der Membranringe Stützplatten aus Metall vorgesehen, die biegeelastisch ausgebildet sind.

Schließlich ist aus der US 5,286,231 ein flexibler ringförmiger Elastomerkörper zur Kupplung einer antreibenden Welle mit einer anzutreibenden Welle bekannt. Der ringförmige Elastomerkörper weist sechs Befestigungsstellen bzw. eingegossene Befestigungsbuchsen auf, wobei der Bereich zwischen zwei benachbarten Befestigungsbuchsen jeweils verjüngt ist. Der ringförmige Elastomerkörper ist ferner so geformt, dass er zwischen zwei benachbarten Befestigungsbuchsen jeweils eine neutrale Achse oder Faser aufweist, die nach außen gekrümmt ist und innerhalb eines Bereiches liegt, welcher einerseits durch einen äußeren Bogen und andererseits durch einen inneren Bogen begrenzt ist, wobei der innere Bogen in bestimmten Fälle auch eine Gerade sein kann, und wobei die beiden Bögen bzw. die Gerade sich innerhalb des Materials des Elastomerkörpers zwischen zwei benachbarten Befestigungsbuchsen erstrecken.

Aufgabe der Erfindung ist es, eine Ringlamelle der eingangs genannten Art zu schaffen, die bei hoher Bruchfestigkeit einen größeren Axialversatzausgleich sowie einen größeren Winkelversatzausgleich als herkömmliche Ringlamellen dieser Art ermöglicht. Insbesondere liegt der Erfindung die Aufgabe zugrunde, ein Lamellenpaket bzw. eine flexible Wellenkupplung für entsprechend große Verlagerungen zu schaffen.

Diese Aufgabe wird durch eine Ringlamelle mit den Merkmalen des Anspruchs 1 gelöst. Die erfindungsgemäße Ringlamelle ist im wesentlichen dadurch gekennzeichnet, dass die durch die Mittelpunkte zweier aufeinander folgender Befestigungsbohrungen definierte Verbindungsgerade als Symmetrielinie mittig zwischen einem Außenkonturabschnitt und einem Innenkonturabschnitt der Verjüngung verläuft, wobei die Ringlamelle folgende geometrische Größenverhältnisse erfüllt:
Dt/D1 = 10 bis 12,
D2/Dt = 1,1 bis 1,2,
Dt/B1 = 9 bis 16 und
B2/Dt = 0,88 bis 0,93,
wobei Dt der Durchmesser des Lochkreises, D1 der Durchmesser der jeweiligen Befestigungsbohrung, D2 der größte Außendurchmesser der Ringlamelle, B1 die Breite der schmalsten Stelle des Ringlamellenabschnittes zwischen zwei aufeinander folgenden Befestigungsbohrungen und B2 die Breite der Ringlamellenaußenkontur ist.

Versuche haben gezeigt, daß Wellenkupplungen mit erfindungsgemäßen Ringlamellen bei gleich hoher Betriebssicherheit größere Verlagerungen ausgleichen können als herkömmliche Wellenkupplungen dieser Art.

Hervorragende Ergebnisse wurden dabei erzielt, wenn das Verhältnis von Lochkreisdurchmesser Dt zum kleinsten Innendurchmesser D3 der erfindungsgemäßen Ringlamelle im Bereich von 1,5 bis 1,65 liegt.

Vorteilhaft ist es ferner, wenn die Dicke der einzelnen Ringlamellen jeweils im Bereich von 0,2 bis 0,4 mm liegt. Als Werkstoff für die Ringlamellen wird Chrom-Nickel-Stahl, insbesondere X12CrNi 17 7 bevorzugt.

Eine weitere vorteilhafte Ausgestaltung der Erfindung besteht in Bezug auf ein Lamellenpaket aus erfindungsgemäßen Ringlamellen darin, daß zwischen den einzelnen Ringlamellen oder zwischen Paketen aus mehreren Ringlamellen jeweils reibkorrosionsmindernde Oberflächen aufweisende Unterlegscheiben angeordnet sind. Hierdurch wird die Betriebssicherheit einer entsprechend aufgebauten Wellenkupplung zusätzlich verbessert. Die Unterlegscheiben können nach einer bevorzugten Ausgestaltung insbesondere aus Kunststoff bestehen oder eine Gleitbeschichtung aufweisen. Als Kunststoff bzw. Gleitbeschichtung kann vorzugsweise Teflon® verwendet werden.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Im einzelnen zeigen:
- Fig. 1: eine Draufsicht auf eine erfindungsgemäße Ringlamelle,
- Fig. 2: eine vergrößerte Schnittansicht auf den Befestigungspunkt eines aus Ringlamellen gemäß Fig. 1 und zwischengeordneten Unterlegscheiben gebildeten Lamellenpakets,
- Fig. 3: eine Draufsicht auf ein zweites Ausführungsbeispiel einer erfindungsgemäßen Ringlamelle,
- Fig. 4: eine Draufsicht auf ein drittes Ausführungsbeispiel einer erfindungsgemäßen Ringlamelle, und
- Fig. 5: eine Draufsicht auf ein viertes Ausführungsbeispiel einer erfindungsgemäßen Ringlamelle.

Die in der Zeichnung dargestellte Ringlamelle 1 ist symmetrisch ausgebildet und für flexible Wellenkupplungen bestimmt, deren beide jeweils einen Anschlußflansch aufweisende Kupplungshälften über ein Paket solcher Ringlamellen drehstarr und axial- und winkelbeweglich miteinander verbunden sind, wobei das Lamellenpaket mittels umfangsmäßig verteilt angeordneter Befestigungs- und Spannmittel 2, 3 wechselweise an den beiden Anschlußflanschen befestigt ist.

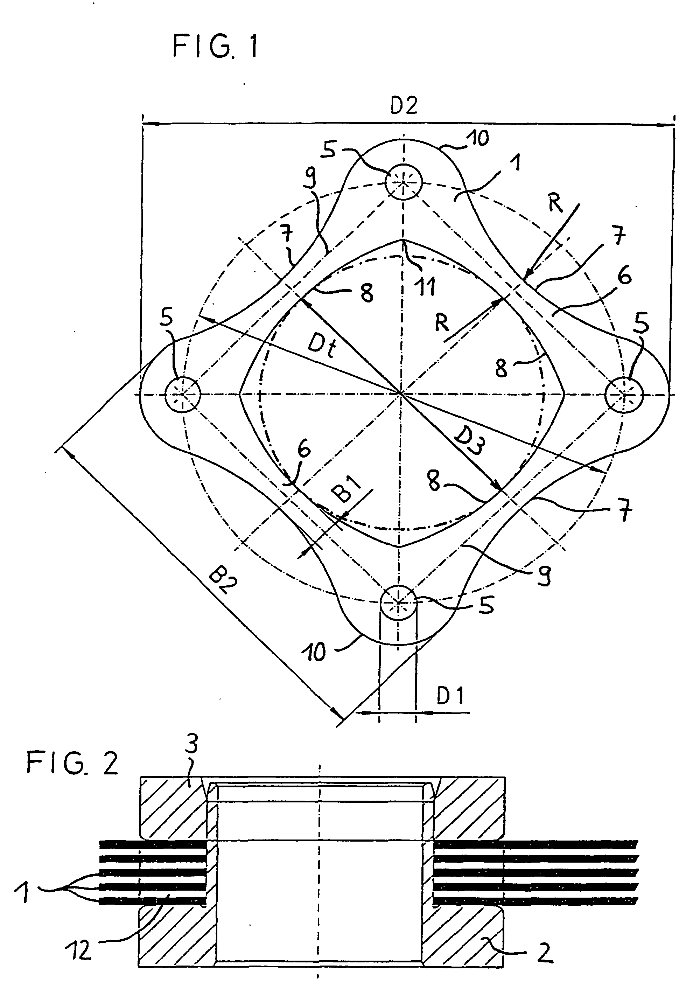

Die Ringlamelle 1 hat eine im wesentlichen viereckige Form und ist mit vier Befestigungsbohrungen 5 versehen, die auf einem gemeinsamen Lochkreis gleichmäßig verteilt angeordnet sind und jeweils den gleichen Durchmesser D1 aufweisen (vgl. Fig. 1). Der Durchmesser des Lochkreises ist mit Dt bezeichnet.

Der zwischen zwei benachbarten Befestigungsbohrungen 5 gelegene Ringlamellenabschnitt 6 weist jeweils eine konkav ausgebildete Außenkontur 7 sowie eine konkav ausgebildete Innenkontur 8 auf. Der jeweilige Ringlamellenabschnitt weist somit eine Verjüngung auf, deren schmalste Stelle in der Mitte zwischen zwei benachbarten Befestigungsbohrungen 5 liegt. Die Breite der schmalsten Stelle ist mit B1 bezeichnet. Die Außenkontur 7 und die Innenkontur 8 der verjüngten Lamellenabschnitte 6 sind jeweils kreisbogenförmig ausgebildet, wobei beide Kreisbögen den gleichen Radius R haben. Ferner ist zu erkennen, daß die Befestigungsbohrungen 5 so angeordnet sind, daß die durch die Mittelpunkte zweier aufeinander folgender Befestigungsbohrungen 5 definierte Verbindungsgerade 9 als Symmetrielinie mittig zwischen der konkav ausgebildeten Außenkontur 7 und der konkav ausgebildeten Innenkontur 8 der Verjüngung verläuft. Der kleinste Innendurchmesser der Ringlamelle 1, der durch die schmalsten Stellen zweier diametral gegenüberliegender Verjüngungen definiert ist, ist mit D3 bezeichnet.

An den Befestigungsbohrungen 5 weist die Ringlamelle 1 jeweils einen konvex ausgebildeten kreisbogenförmigen Außenkonturabschnitt 10 auf, der zwei benachbarte konkav ausgebildete Außenkonturabschnitte 7 stufenlos miteinander verbindet. Zwischen den konkav ausgebildeten Innenkonturabschnitte 8 sind kreisbogenförmige Kehlabschnitte 11 ausgebildet, die einen relativ kleinen Radius aufweisen. Die Breite der Ringlamellen-. außenkontur ist in Fig. 1 mit B2 bezeichnet.

Die Lamellendicke beträgt vorzugsweise 0,2 bis 0,4 mm. Als Lamellenwerkstoff wird Chrom-Nickel-Stahl, insbesondere X12CrNi 17 7 bevorzugt.

Die geometrischen Größenverhältnisse der dargestellten Ringlamelle 1 können in bestimmten Bereichen variiert werden. Zur Erzielung einer optimalen Flexibilität bei zugleich hoher Bruchfestigkeit wurden folgende Größenverhältnisse als vorteilhaft ermittelt:
Dt/D1 = 10 bis 12,
D2/Dt = 1,1 bis 1,2,
Dt/B1 = 9 bis 16,
B2/Dt = 0,88 bis 0,93 und
Dt/D3 = 1,5 bis 1,65.

Das aus mehreren Ringlamellen 1 gebildete Lamellenpaket wird mittels Spannbolzen (nicht gezeigt) und Spannbuchsen 2 und daran axial aufgeschobenen Spannringen 3 wechselweise mit den Anschlußflanschen der Kupplungshälften einer Wellenkupplung (nicht gezeigt) verschraubt (vgl. Fig. 2). Zwischen den Ringlamellen 1 sind reibkorrosionsmindernde Oberflächen aufweisende Unterlegscheiben 12 angeordnet sind. Die Unterlegscheiben 12 haben im wesentlichen den gleichen Außendurchmesser wie der Spannring 3 und der Kragen der Spannbuchse 2. Die Unterlegscheiben 12 können vorzugsweise aus Kunststoff bestehen oder eine Gleitbeschichtung aus Kunststoff aufweisen. Als Werkstoff eignet sich hierzu insbesondere Polytetrafluoräthylen-Kunststoff.

Zum Ausgleich eines Radialversatzes kann die Kupplung gegebenenfalls mit einem Zwischenring oder einer Zwischenhülse und einem weiteren entsprechenden Lamellenpaket versehen werden.

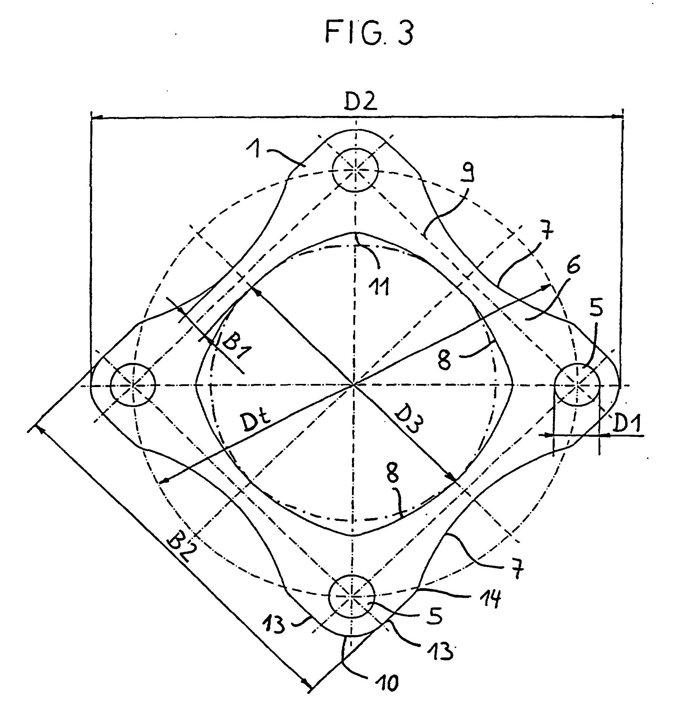

Die Figuren 3 bis 5 zeigen weitere Ausführungsbeispiele einer erfindungsgemäßen Ringlamelle 1. Die in Fig. 3 dargestellte Ringlamelle 1 unterscheidet sich von der Ringlamelle gemäß Fig. 1 im wesentlichen dadurch, daß an den Befestigungsbohrungen 5 jeweils zwei im wesentlichen geradlinige Außenkonturabschnitte 13 ausgebildet sind, die im wesentlichen rechtwinklig zueinander angeordnet und durch einen konvex ausgebildeten kreisbogenförmigen Außenkonturabschnitt 10 miteinander verbunden sind. Die konkav ausgebildeten Außenkonturabschnitte 7, welche mit den entsprechend ausgebildeten Innenkonturabschnitten 8 die Verjüngungen definieren, sind über abgerundete Abschnitte 14 stufenlos mit den geradlinigen Außenkonturabschnitten 13 verbunden.

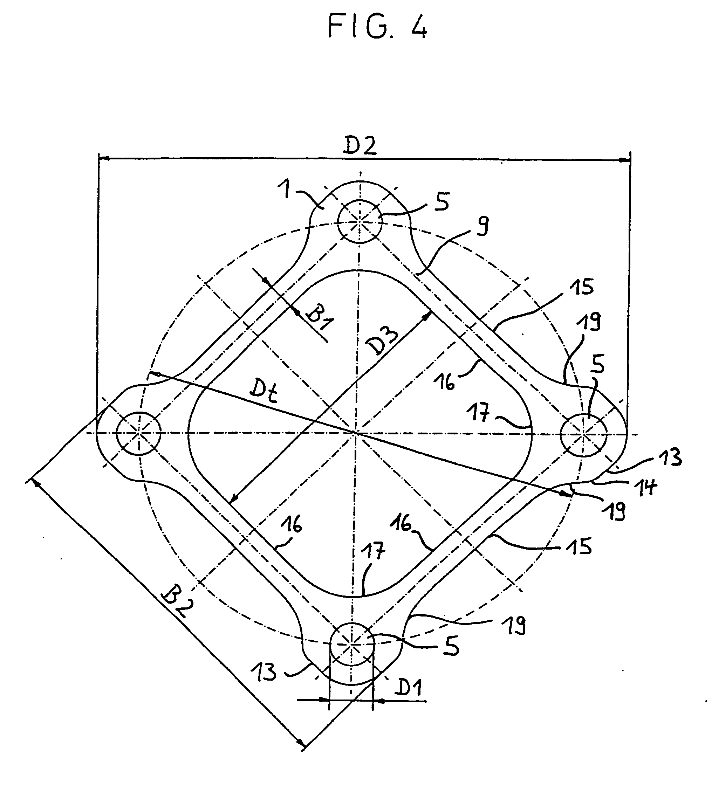

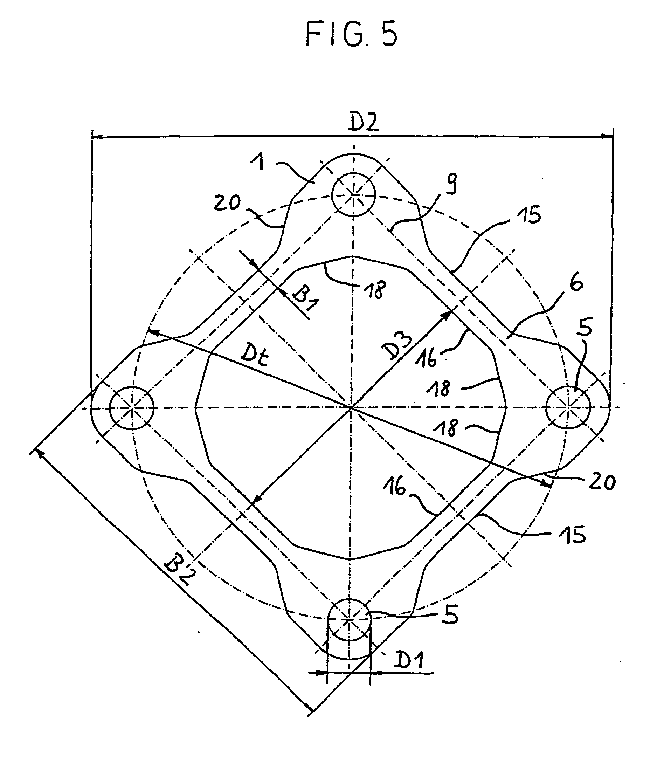

Die in den Figuren 4 und 5 dargestellten Ringlamellen 1 unterscheiden sich von den Ringlamellen gemäß den Figuren 1 und 3 dadurch, daß die jeweilige Verjüngung zwischen zwei benachbarten Befestigungsbohrungen 5 durch eine Einbuchtung mit einem mittleren geradlinigen Außenkonturabschnitt 15 und einen dazu parallel verlaufenden Innenkonturabschnitt 16 definiert ist. Bei der Ringlamelle gemäß Fig. 4 sind die geradlinigen Innenkonturabschnitte 16 durch kreisbogenförmige Kehlabschnitte 17 stufenlos miteinander verbunden, während die geradlinigen Innenkonturabschnitte 16 der Ringlamelle gemäß Fig. 5 jeweils durch zwei ebenfalls geradlinige, jedoch abgewinkelte Innenkonturabschnitte 18 mit dem nächsten, die schmalste Stelle der Verjüngung definierenden geradlinigen Innenkonturabschnitt 16 verbunden sind. Die Übergänge zwischen den einzelnen geradlinigen Innenkonturabschnitten 16 bzw. 18 der Ringlamelle gemäß Fig. 5 sind jeweils abgerundet und somit stufenlos ausgebildet. Die Einbuchtungen in der Außenkontur der jeweiligen Ringlamelle gemäß Fig. 4 bzw. Fig. 5 sind entsprechend der jeweiligen Innenkontur gestaltet. So geht der geradlinige Außenkonturabschnitt 15 der Ringlamelle gemäß Fig. 4 zunächst in Richtung der Befestigungsbohrungen 5 jeweils in einen kreisbogenförmigen Außenkonturabschnitt 19 über, der wiederum über einen konvex abgerundeten Außenkonturabschnitt 14 in den relativ kurzen, geradlinigen Abschnitt 13 an der Befestigungsbohrung 5 übergeht. Die kreisbogenförmigen Abschnitte 17 und 19 weisen dabei jeweils den gleichen Kreisbogenradius auf. In Fig. 5 ist zu erkennen, daß den im Bereich der Befestigungsbohrungen 5 angeordneten geradlinigen Innenkonturabschnitten 18 entsprechende geradlinige Außenkonturabschnitte 20 zugeordnet sind, die gegenüber dem jeweiligen mittleren geradlinigen Außenkonturabschnitt 15 im wesentlichen um den gleichen Betrag abgewinkelt sind, wie die Innenkonturabschnitte 18 gegenüber den mittleren, die Verjüngung definierenden Innenkonturabschnitten 16.

## Patentansprüche

1. Ringlamelle (1) aus Stahl für flexible Wellenkupplungen, deren beide jeweils einen Anschlußflansch aufweisende Kupplungshälften über ein Paket solcher Ringlamellen drehstarr und axial- und winkelbeweglich miteinander verbunden sind, wobei das Lamellenpaket mittels umfangsmäßig verteilt angeordneter Befestigungs- und Spannmittel (2, 3) wechselweise an den beiden Anschlußflanschen befestigt ist, und wobei die Ringlamelle vier auf einem gemeinsamen Lochkreis gleichmäßig verteilt angeordnete Befestigungsbohrungen (5) aufweist und sich die Breite des Ringlamellenabschnitts (6) zwischen zwei aufeinander folgenden Befestigungsbohrungen (5) verjüngt,
**dadurch gekennzeichnet, daß** die
durch die Mittelpunkte zweier aufeinander folgender Befestigungsbohrungen (5) definierte Verbindungsgerade (9) als Symmetrielinie mittig zwischen einem Außenkonturabschnitt (7, 15) und einem Innenkonturabschnitt (8, 16) der Verjüngung verläuft, und wobei die Ringlamelle (1) folgende geometrische Größenverhältnisse erfüllt:
Dt/D1 = 10 bis 12,
D2/Dt = 1,1 bis 1,2,
Dt/B1 = 9 bis 16 und
B2/Dt = 0,88 bis 0,93,
wobei Dt der Durchmesser des Lochkreises, D1 der Durchmesser der jeweiligen Befestigungsbohrung (5), D2 der größte Außendurchmesser der Ringlamelle (1), B1 die Breite der schmalsten Stelle des Ringlamellenabschnittes (6) zwischen zwei aufeinander folgenden Befestigungsbohrungen (5) und B2 die Breite der Ringlamellenaußenkontur ist.

2. Ringlamelle nach Anspruch 1,
**dadurch gekennzeichnet, daß** das Verhältnis von Lochkreisdurchmesser Dt zum kleinsten Innendurchmesser D3 der Ringlamelle (1) im Bereich von 1,5 bis 1,65 liegt.

3. Ringlamelle nach Anspruch 1 oder 2,
**dadurch gekennzeichnet, daß** ihre Dicke 0,2 bis 0,4 mm beträgt.

4. Ringlamelle nach einem der Ansprüche 1 bis 3,
**dadurch gekennzeichnet, daß** sie aus Chrom-Nickel-Stahl besteht.

5. Ringlamelle nach einem der Ansprüche 1 bis 4,
**dadurch gekennzeichnet, daß** die Verjüngung zwischen zwei benachbarten Befestigungsbohrungen (5) durch einen kreisbogenförmigen Außenkonturabschnitt (7) und einen kreisbogenförmigen Innenkonturabschnitt (8) definiert ist.

6. Ringlamelle nach Anspruch 5,
**dadurch gekennzeichnet, daß** beide Kreisbögen den gleichen Radius (R) haben.

7. Ringlamelle nach einem der Ansprüche 1 bis 4,
**dadurch gekennzeichnet, daß** die Verjüngung zwischen zwei benachbarten Befestigungsbohrungen (5) durch eine Einbuchtung mit einem mittleren geradlinigen Außenkonturabschnitt (15) und einen dazu parallel verlaufenden Innenkonturabschnitt (16) definiert ist.

8. Lamellenpaket mit mehreren Ringlamellen gemäß einem der Ansprüche 1 bis 7,
**dadurch gekennzeichnet, daß** zwischen den einzelnen Ringlamellen (1) oder zwischen Paketen aus mehreren Ringlamellen (1) jeweils reibkorrosionsmindernde Oberflächen aufweisende Unterlegscheiben (12) angeordnet sind.

9. Lamellenpaket nach Anspruch 8,
**dadurch gekennzeichnet, daß** die Unterlegscheiben (12) aus Kunststoff bestehen oder eine Kunststoffbeschichtung aufweisen.

10. Lamellenpaket nach Anspruch 8 oder 9,
**dadurch gekennzeichnet, daß** die Unterlegscheiben (12) aus Polytetrafluoräthylen bestehen oder eine Beschichtung aus Polytetrafluoräthylen aufweisen.

11. Flexible Wellenkupplung, deren beide jeweils einen Anschlußflansch aufweisende Kupplungshälften über ein Paket aus Ringlamellen (1) gemäß einem der Ansprüche 1 bis 7 drehstarr und axial- und winkelbeweglich miteinander verbunden sind, wobei das Lamellenpaket mittels umfangsmäßig verteilt angeordneter Befestigungs- und Spannmittel (2, 3) wechselweise an den beiden Anschlußflanschen befestigt ist.

12. Kupplung nach Anspruch 11, wobei das Lamellenpaket gemäß einem der Ansprüche 8 bis 10 ausgebildet ist.

13. Kupplung nach Anspruch 11 oder 12,
**dadurch gekennzeichnet, daß** das Lamellenpaket doppelt ausgeführt ist, wobei zwischen den beiden Lamellenpaketen ein Zwischenring oder eine Zwischenhülse angeordnet ist und das jeweilige Lamellenpaket wechselweise an einem der beiden Anschlußflansche und an einer der beiden Seiten des Zwischenrings bzw. der Zwischenhülse befestigt ist.

## Claims

1. An annular disk (1) made of steel for flexible shaft couplings, whose two coupling halves each having a connection flange are connected to each other via a packet of such annular disks in a torsionally rigid manner, but in such a way as to enable their axial and angular movement, wherein the disk packet is alternatingly secured to both connection flanges via circumferentially distributed attachment and clamping means (2, 3), and wherein the annular disk has four attachment holes uniformly distributed on a common hole circle, and the width of the annular disk section tapers between two consecutive attachment holes, **characterized in that** the connecting line (9) defined by the midpoints of two consecutive attachment holes (5) runs centrally between an outer contour section (7, 15) and an inner contour section (8, 16) of the taper, and
wherein the annular disk (1) satisfies the following size ratios:
Dt/D1 = 10 to 12,
D2/Dt = 1.1 to 1.2,
Dt/B1 = 9 to 16, and
B2/Dt = 0.88 to 0.93,
wherein Dt is the diameter of the hole circle, D1 is the diameter of the respective attachment hole (5), D2 is the largest outside diameter of the annular disk (1), B1 is the width of the narrowest part of the annular disk section (6) between two consecutive attachment holes (5), and B2 is the width of the annular disk outer contour.

2. An annular disk according to claim 1, **characterized in that** the ratio of the hole circle diameter Dt to the smallest inside diameter D3 of the annular disk (1) ranges from 1.5 to 1.65.

3. An annular disk according to claim 1 or 2, **characterized in that** its thickness measures 0.2 to 0.4 mm.

4. An annular disk according to one of claims 1 to 3, **characterized in that** it consists of chromium-nickel-steel.

5. An annular disk according to one of claims 1 to 4, **characterized in that** the taper between two adjacent attachment holes (5) is defined by an outer contour section (7) having a circular arc profile and an inner contour section (8) having a circular arc profile.

6. An annular disk according to claim 5, **characterized in that** both circular arcs have the same radius (R).

7. An annular disk according to one of claims 1 to 4, **characterized in that** the taper between two adjacent attachment holes (5) is defined by a recess with a central, straight outer contour section (15) and an inner contour section running (16) parallel thereto.

8. A disk packet with several annular disks according to one of claims 1 to 7, **characterized in that** plain washers (12) with fretting corrosion-reducing surfaces are arranged between the individual annular disks (1) or between packets comprised of several annular disks (1).

9. A disk packet according to claim 8, **characterized in that** the plain washers (12) consist of plastic, or have a plastic coating.

10. A disk packet according to claim 8 or 9, **characterized in that** the plain washers (12) consist of polytetrafluoroethylene, or have a coating made out of polytetrafluoroethylene.

11. A flexible shaft coupling, whose two coupling halves each having a connection flange are connected to each other via a packet of annular disks (1) according to one of claims 1 to 7 in a torsionally rigid manner, but in such a way as to enable their axial and angular movement, wherein the disk packet is alternatingly secured to both connection flanges via circumferentially distributed attachment and clamping means (2, 3).

12. A coupling according to claim 11, wherein the packet of annular disks is designed according to one of the preceding claims 8 to 10.

13. A coupling according to claim 11 or 12, **characterized in that** the disk packet has a dual design, wherein an intermediate ring or intermediate sleeve is arranged between the two disk packet, and the respective disk packet is alternatingly attached to one of the two connection flanges, and to one of the two sides of the intermediate ring or intermediate sleeve.

## Revendications

1. Lame annulaire (1) en acier pour des accouplements flexibles pour des arbres, dont les deux moitiés d'accouplement, présentant chacune un flasque de raccordement, sont reliées l'une à l'autre par l'intermédiaire d'un faisceau de telles lames annulaires de manière rigide en rotation et de manière mobile axialement et angulairement, le faisceau de lames étant fixé alternativement sur les deux flasques de raccordement à l'aide de moyens de fixation et de serrage (2, 3) disposés de manière répartie sur la périphérie, la lame annulaire présentant quatre perçages de fixation (5) répartis uniformément sur un diamètre de perçage commun et la largeur de la section de la lame annulaire (6) rétrécissant entre deux perçages de fixation (5) successifs, **caractérisée en ce que** la droite de liaison (9) définie par les points de centre de deux perçages de fixation (5) successifs s'étend, en tant que ligne de symétrie, de manière centrée entre une section de contour extérieur (7, 15) et une section de contour intérieur (8, 16) du rétrécissement, et la lame annulaire répondant aux rapports de taille géométriques suivants :
Dt/D1 = 10 à 12,
D2/Dt = 1,1 à 1,2
Dt/B1 = 9 à 16 et
B2/Dt = 0,88 à 0,93,
Dt représentant le diamètre de perçage, D1 le diamètre de chaque perçage de fixation (5), D2 le plus grand diamètre extérieur de la lame annulaire (1), B1 la largeur de l'endroit le plus étroit de la section de la lame annulaire (6) entre deux perçages de fixation (5) successifs et B2 la largeur du contour extérieur de la lame annulaire.

2. Lame annulaire selon la revendication 1,
**caractérisée en ce que** le rapport entre le diamètre de perçage Dt et le diamètre intérieur le plus petit D3 de la lame annulaire (1) se situe dans la plage de 1,5 à 1,65.

3. Lame annulaire selon la revendication 1 ou 2,
**caractérisée en ce que** son épaisseur est de 0,1 à 0,4 mm.

4. Lame annulaire selon l'une des revendications 1 à 3,
**caractérisée en ce qu'**elle est réalisée an acier au nickel-chrome.

5. Lame annulaire selon l'une des revendications 1 à 4,
**caractérisée en ce que** le rétrécissement entre deux perçages de fixation (5) successifs est défini par une section de contour extérieure en forme d'arc de cercle (7) et par une section de contour intérieure en forme d'arc de cercle (8).

6. Lame annulaire selon la revendication 5,
**caractérisée en ce que** les deux arcs de cercle ont le même rayon (R).

7. Lame annulaire selon l'une des revendications 1 à 4,
**caractérisée en ce que** le rétrécissement entre deux perçages de fixation (5) successifs est défini par un renfoncement avec une section centrale du contour extérieur (15) en ligne droite et une section de contour intérieur (16) s'étendant parallèlement à celle-ci.

8. Faisceau de lames avec plusieurs lames annulaires selon l'une des revendications 1 à 7,
**caractérisé en ce que** des rondelles (12) présentant des surfaces réduisant la corrosion de frottement sont disposées à chaque fois entre les différentes lames annulaires (1) ou entre des faisceaux composés de plusieurs lames annulaires (1).

9. Faisceau de lames selon la revendication 8,
**caractérisé en ce que** les rondelles (12) sont réalisées en matière synthétique ou présentent un revêtement en une matière synthétique.

10. Faisceau de lames selon la revendication 8 ou 9,
**caractérisé en ce que** les rondelles (12) sont réalisées en polytétrafluoréthylène ou présentent un revêtement en polytétrafluoréthylène.

11. Accouplement flexible pour des arbres dont les deux moitiés d'accouplement, présentant chacune un flasque de raccordement, sont reliées l'une à l'autre par un faisceau de lames annulaires (1) selon l'une des revendications 1 à 7 de manière rigide en rotation et de manière mobile axialement et angulairement, le faisceau de lames étant fixé alternativement sur les deux flasques de raccordement à l'aide de moyens de fixation et de serrage (2, 3) disposés de manière répartie sur la périphérie.

12. Accouplement selon la revendication 11, le faisceau de lames étant formé selon l'une des revendications 8 à 10.

13. Accouplement selon la revendication 11 ou 12,
**Caractérisé en ce que** le faisceau de lames est réalisé de manière double, une bague intermédiaire ou une douille intermédiaire étant disposée entre les deux faisceaux de lames et **en ce que** chaque faisceau de lames est fixé alternativement sur l'un des deux flasques de raccordement et sur l'un des deux côtés de la bague intermédiaire ou de la douille intermédiaire.
